# EUROPÄISCHE PATENTSCHRIFT

(11) **EP 0 620 416 B1**
(45) Veröffentlichungstag und Bekanntmachung des Hinweises auf die Patenterteilung: **02.01.1997**
(21) Anmeldenummer: 93105911.7
(22) Anmeldetag: 10.04.1993
(51) Int. Cl.: G01D 5/16, G01B 7/02

(54) **Magnetisches Messsystem**
Magnetic measuring system
Système de mesure magnétique

(43) Veröffentlichungstag der Anmeldung: 19.10.1994
(73) Patentinhaber: Dr. Johannes Heidenhain GmbH, D-83292 Traunreut (DE)
(72) Erfinder: Spies, Alfons, Dipl.-Ing., W-8221 Seebruck (DE)

(56) Entgegenhaltungen:
- DE-A- 3 422 328
- FR-A- 2 452 716
- PATENT ABSTRACTS OF JAPAN vol. 5, no. 201 (P-094)19. Dezember 1981
- 1986 Digests of INTERMAG '86. International Magnetics Conference, April 14-17, Hyatt Regency Hotel, Phoenix, Arizona, USA, CH2309 - 3/86/0000 - AC-1 $01.00 (c) 1986 IEEE. T.J. Nelson et al,"Shear-sensitive magnetoresistive robotic tactile sensor"

## Beschreibung

Die Erfindung bezieht sich auf eine Positionsmeßeinrichtung gemäß dem Oberbegriff des Anspruches 1.

Derartige Einrichtungen sind hinreichend bekannt. Als Beispiel sei auf die DE 28 34 519 A1 hingewiesen. Aus dieser Druckschrift ist eine digitale Längenmeßvorrichtung bekannt, mit zwei relativ zueinander verstellbaren Teilen, von denen einer einen Maßstab und der andere einen Detektor zum Abtasten des Maßstabes und zum Erzeugen elektrischer Signale, die der abgetasteten Länge entsprechen, trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, und wobei der Detektor ein Lesekopf für die Markierungen ist. Als eine weiterverarbeitende Einrichtung kann dabei eine Digital-Anzeigevorrichtung verwendet werden.

Der Markierungsträger kann dabei eine Magnetschicht sein, wobei die Markierungen durch sinusförmige Magnetisierung zweier Spuren gebildet sind, wobei für jede Spur je ein Lesekopf vorhanden ist. Der Detektor kann mindestens einen flußempfindlichen Magnetkopf aufweisen, der zum Lesen bei geringer Relativgeschwindigkeit zwischen Detektor und Markierungsträger nach dem Prinzip eines magentischen Modulators geschaltet ist. Bei der angegebenen Veröffentlichung fehlen detaillierte Angaben über die Ausführung des Detektors vollständig.

Ferner ist aus der EP 0 069 392 A2 eine digitale Positionsmeßeinrichtung bekannt, bei der ein Detektor vorgesehen ist, der einen magnetoresistiven Sensor aufweist. Dort sind magnetoresistive Sensoren mit unterschiedlichen Kennlinien beschreiben und Brückenschaltungen mit derartigen Sensoren offenbart.

Das Dokument DE-A-3 422 328 offenbart eine Positionsmeßeinrichtung bei der eine periodische magnetische Meßteilung in Meßrichtung von einer Abtasteinheit mit zwei magnetoresistiven Elementen zur Erzeugung von positionsabhängigen Ausgangssignalen abgetastet wird, wobei die magnetoresistiven Elemente der Abtasteinheit so angeordnet sind, daß die Ebene jedes magnetoresistiven Elementes parallel zur Fläche der Meßteilung und unter einem bestimmten Winkel zur Meßrichtung angeordnet sind, wobei dieser Winkel von 0 und 90 Grad abweicht.

Aus der FR-A-2 452 716 ist es bekannt, zur Korrektur magnetoresistive Elemente mittels eines Hilfsfeldes magnetisch vorzuspannen, wobei dieses magnetoresistive Element ein einstellbares Potentiometer darstellt, das bei einer magnetischen Positionsmeßeinrichtung verwendet wird.

Der Erfindung liegt die Aufgabe zugrunde, bei einer Positionsmeßeinrichtung eine Abtasteinheit mit magnetoresistivem Sensor zu schaffen, die unempfindlich gegen Abstandsänderungen gegenüber dem Maßstab ist, deren Abtastsignal die gleiche Frequenz hat, wie die Meßteilung und die wenig Oberwellenanteile enthält.

Diese Aufgabe wird von einer Positionsmeßeinrichtung mit den Merkmalen der Ansprüche 1, 2 oder 3 gelöst.

Die Vorteile der erfindungsgemäßen Positionsmeßeinrichtung liegen in deren Funktionssicherheit, in der Verschiebung des Arbeitspunktes der magnetoresistiven Elemente in den linearen Bereich ihrer Kennlinie und den daraus resultierenden positiven Eigenschaften.

Mit Hilfe der Zeichnungen soll anhand von Ausführungsbeispielen die Erfindung noch näher erläutert werden.

Es zeigt
- Figur 1a: eine Prinzipdarstellung einer Positionsmeßeinrichtung;
- Figur 1b: eine Einzelheit aus Figur 1a;
- Figur 2a: eine Prinzipskizze eines magnetoresistiven Elementes in der Abtasteinheit;
- Figur 2b: eine vektorielle Darstellung der Zusammenhänge zwischen Widerstandsänderung, Magnetisierung und Stromflußrichtung;
- Figur 3: eine Anordnung zur Eliminierung der Nullpunktdrift;
- Figur 4: eine Anordnung magnetoresistiver Elemente in einer Halb-Brückenschaltung;
- Figur 5: eine weitere Anordnung magnetoresistiver Elemente in einem Netzwerk verschaltet;
- Figur 6: eine Anordnung gestaffelter magnetoresistiver Elemente;
- Figur 7: eine Anordnung ähnlich wie in Figur 6, jedoch mit höherer Packungsdichte;
- Figur 8: eine Gruppe magnetoresistiver Elemente, die sich über mehrere Maßstabsperioden erstreckt;
- Figur 9: eine Gruppe von magnetoresistiven Elementen zu einer Vollbrücke zusammengeschaltet;
- Figur 10: eine Brückenschaltung, ähnlich wie in Figur 9;
- Figur 11: eine Anordnungs-Variation in Halbbrückenschaltung;
- Figur 12: eine der Anordnung in Figur 11 ähnliche Formation zur Filterung bestimmter Oberwellen;
- Figur 13: eine Anordnung mit ineinander verschachtelten magnetoresistiven Elementen;
- Figur 14: eine Variation der Anordnung aus Figur 13 mit ineinander verschachtelten, jedoch um ein Viertel der Maßstabsperiode verschobenen Elementen;
- Figur 15: eine Konfiguration von magnetoresistiven Elementen, deren Längen nach einer Cosinus-Funktion abgestuft sind.

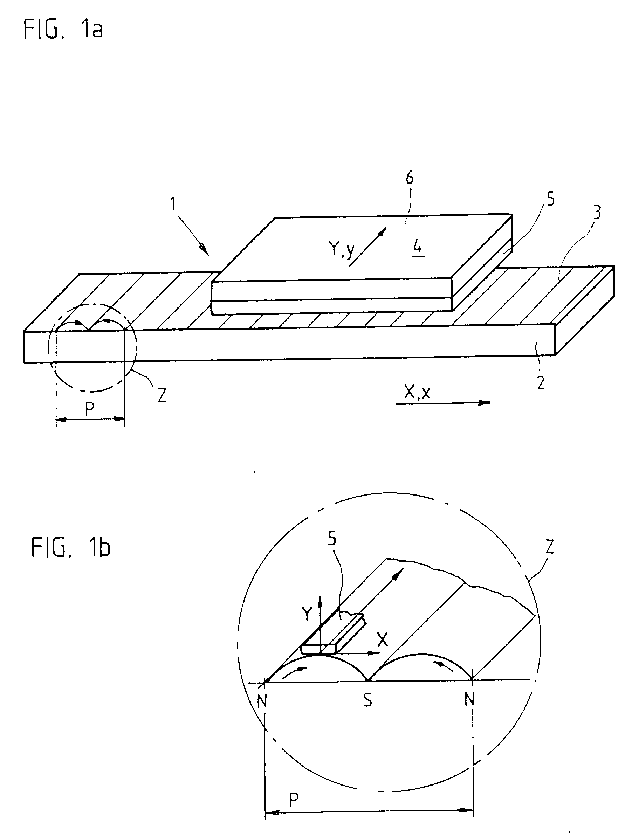

In Figur 1a ist eine Prinzipdarstellung einer magnetischen Längenmeßeinrichtung 1 gezeigt. Die Längenmeßeinrichtung 1 besteht im Wesentlichen aus einem Maßstab 2, der eine periodische Meßteilung 3 aufweist, sowie aus einer Abtasteinheit 4 zur Abtastung der Meßteilung 3. Der Maßstab 2 besteht aus magnetischem Material und ist abwechselnd mit gegensätzlicher Feldstärke magnetisiert - daraus bildet sich die periodische Meßteilung 3 mit der Teilungsperiode P. Die Magnetisierung erfolgt längs der Ebene, in der sich der Maßstab 2 erstreckt, kann aber auch senkrecht dazu verlaufen, was hier jedoch nicht gezeigt ist.

Die Magnetisierung erzeugt ein Streufeld, welches symbolisch in der vergrößerten Einzelheit Z in Figur 1b dargestellt ist.

Die periodische Meßteilung 3 wird von magnetoresistiven Elementen 5 abgetastet, die sich in der Abtasteinheit 4 befinden und auf die in der Beschreibung zu den folgenden Figuren noch näher eingegangen wird. Dabei wird als Bezugszeichen eine 5 für das oder die magnetoresistiven Elemente eingesetzt und um die jeweilige Figurenbezifferung als Index ergänzt.

Die Abtasteinheit 4 weist darüber hinaus einen Baustein 6 auf, der ein magnetisches Hilfsfeld Y erzeugt, welches permanent magnetisch oder elektromagnetisch erzeugt wird.

Das Hilfsfeld Y wirkt senkrecht zum von der Maßstabsmagnetisierung verursachten Streufeld.

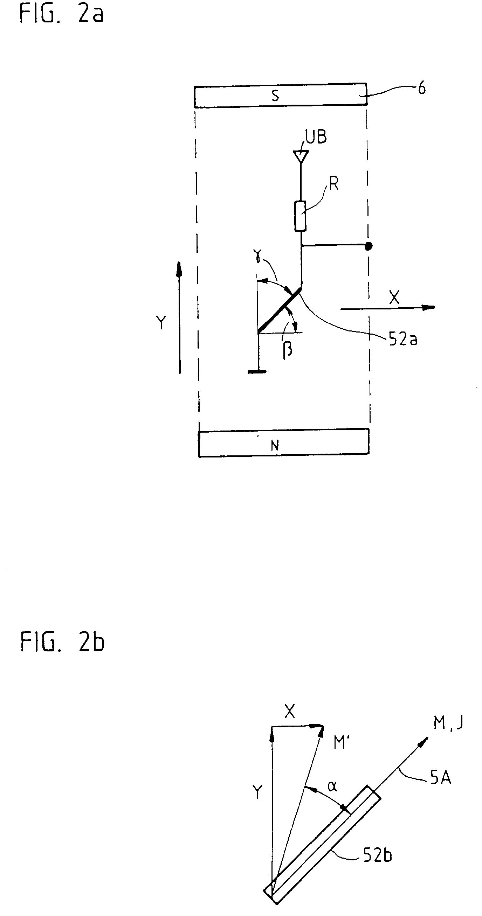

In Figur 2a ist die erfindungsgemäße Anordnung von magnetoresistiven Elementen anhand eines Einzelelementes 52a dargestellt, um das Grundprinzip zu erläutern.

Eine Komponente des von der Maßstabsmagnetisierung verursachten Streufeldes, nachfolgend auch Maßstabsfeld X genannt, wirkt in Richtung der Meßrichtung, die mit x bezeichnet ist. Senkrecht dazu wirkt das Hilfsfeld Y, welches von dem Baustein 6 erzeugt wird, wobei die Richtung des Hilfsfeldes mit y bezeichnet ist. Die magnetoresistiven Elemente 5 unterliegen daher den Auswirkungen beider Magnetfelder X und Y. Das magnetoresistive Element 52a ist unter Winkeln β und γ die von 90° und 0° abweichen zu den Magnetfeldern X und Y angeordnet. Dargestellt ist als bevorzugter Winkel β bzw.γ eine 45° Neigung. Mit Hilfe eines Festwiderstandes 7 ist das magnetoresistive Element 52a zu einer Brückenschaltung, hier einer Halb-Brücke ergänzt werden. Durch die schräge Lage des magnetoresistiven Elementes 52a in der Abtasteinheit 4 wird unter dem Einfluß des Hilfsfeldes Y das magnetoresistive Element 52a magnetisch vorgespannt, was anhand der Darstellung in Figur 2b erläutert wird, für die eine vektorielle Darstellung der Zusammenhänge gewählt wurde.

Ohne Hilfsfeld Y und ohne Maßstabsfeld X liegt die Magnetisierung M auf Grund der starken Anisotropie der magnetfeldempfindlichen Schicht des Elementes 52b in Richtung der sogenannten leichten Achse, die, bedingt durch das Herstellungsverfahren in Richtung der Elementenachse 5A liegt. Wird an dem Element 52b eine Spannung U angelegt, so fließt ein Strom J ebenfalls in Strichrichtung. Durch ein genügend großes Hilfsfeld Y wird nun die Magnetisierung M in Richtung des Hilfsfeldes Y aus der Elementenachse 5A herausgedreht. Die Magnetisierung M' und der Strom J bilden nun einen Winkel α miteinander. Durch vektorielle Addition von Hilfsfeld Y und Maßstabsfeld X wird nun der Winkel α in kleinen Beträgen entsprechend dem sich ändernden Maßstabsfeld X verändert. Da der Widerstand R des Elementes von dem Winkel α abhängt, den Strom J und Magnetisierung M miteinander bilden, erhält man bei Bewegung des magnetoresistiven Elementes 52b über den Maßstab 2 eine sich ändernde Spannung.

Der Widerstand hängt gemäß Δ R = ρ cos² (α+δα) vom Winkel α ab.

Für kleine Änderungen δα des Winkels erhält man die Näherung Δ R = ρ (1-(X/Y)).

Durch diese Maßnahme wird auch der Arbeitspunkt auf der Kennlinie der magnetoresistiven Elemente 5 in einen linearen Bereich verschoben und das Abtastsignal, welches durch die Abtastung des Maßstabes 2 gewonnen wird, hat die gleiche Frequenz, wie die Meßteilung 3 bzw. deren Teilungsperiode P.

Bei konventionell angeordneten magnetoresistiven Elementen ohne Hilfsmagnetfeld hat das Abtastsignal hingegen die doppelte Frequenz und die Kennlinie ist "quadratisch". Durch die oben genannten Maßnahmen wird auch die Hysterese wesentlich kleiner als bei quadratischer Kennlinie.

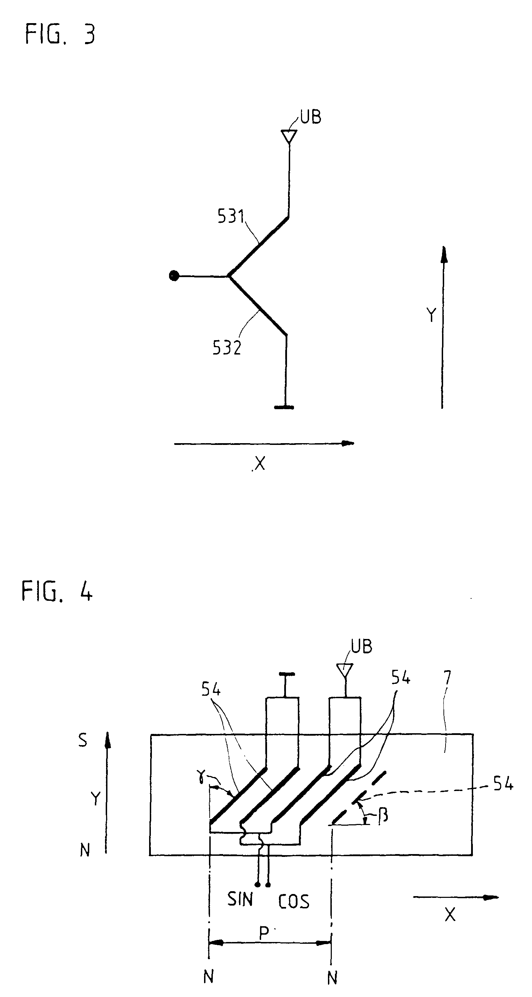

In Figur 3 sind zwei magnetoresistive Elemente 531 und 532 zu einer sogenannten Halb-Brücke zusammengeschaltet. Durch deren gegenseitige geometrische Lage im Einflußbereich des Maßstabs- und Hilfsfeldes X- und Y wird die Nullpunktdrift der einzelnen - im folgenden Sensor-Elemente genannten - magnetoresistiven Elemente 531 und 532 weitgehend elimiert, da sie sich im Wesentlichen gegenseitig aufheben. Diese Anordnung eignet sich besonders zur Abtastung codierter Meßteilungen.

Bei Abtastung der Meßteilung 2 mit einzelnen Sensor-Elementen 5 wird naturgemäß nur ein Signal geringer Stärke generiert, deshalb wird in der Praxis immer eine Gruppe von Sensor-Elementen 5 in der Abtasteinheit 4 vorgesehen, die auf unterschiedlichste Weise zu Brückenschaltungen zusammen geschaltet werden, wie die nachfolgenden Ausführungsbeispiele zeigen werden.

In Figur 4 ist die Anordnung von magnetoresistiven Elementen 54 auf einer Abtastplatte 7 gemäß der Erfindung gezeigt. Die Abtastplatte 7 befindet sich in der Abtasteinheit 4. Die magnetfeld-empfindlichen Zonen der Elemente 54 sind dick gezeichnet. Diese Zonen sind unter Winkeln β und γ geneigt gegenüber der Meßrichtung x und dem Hilfsfeld Y (vorzugsweise 45°, d.h., β=γ). Zur Gewinnung von zwei sinusförmigen Signalen sind mehrere magnetoresistive Elemente 54 in Abständen von 1/4 der Maßstabsperiode (gemessen von N bis N) angeordnet und in an sich bekannter Weise zu Halb- oder Vollbrücken verknüpft.

Hier sind zwei Halbbrücken gezeigt, die mit einer Betriebsspannung UB betrieben werden und die an Ausgängen je ein SIN und COS-Signal liefern.

Durch die Schrägstellung der Sensor-Elemente 54 zu dem Hilfsfeld Y wird, wie bereits im Prinzip beschrieben, der Arbeitspunkt der Sensor-Elemente 54 auf der Kennlinie in einen linearen Bereich verschoben. Die Signalperiode entspricht - im Gegensatz zu herkömmlichen Anordnungen - der Teilungsperiode P gemessen von N bis N. Durch die Linearisierung der Kennlinie werden die Signale außerdem sinusförmiger und die Hysterese wird kleiner.

Ein weiterer Vorteil liegt darin, daß ganz allgemein über die Stärke des Hilfsfeldes Y die Empfindlichkeit der Sensor-Elemente eingestellt werden kann, was besonders bei Maßstäben mit großen Teilungsperioden von Vorteil ist, da solche Maßstäbe starke Felder erzeugen, die gewöhnliche Sensor-Elemente in die Sättigung treiben würden und man deshalb den Abstand zwischen Maßstab und Abtasteinheit so groß wählen müßte, daß die Sensor-Elemente nicht übersteuert würden - man würde also den Vorteil einer großen Maßstab-Teilungsperiode wieder verlieren.

Durch die beschriebene Linearisierung erhält man auch eine geringere Abstandsempfindlichkeit der Signalamplitude, da die effektive vom Sensor-Element ausgenützte Maßstab-Teilungsperiode jetzt doppelt so groß ist wie im Falle eines Sensors mit quadratischer Kennlinie.

Die vorbeschriebenen Vorteile gelten selbstverständlich auch für die nachfolgenden Ausführungsbeispiele, bei denen besonders auf die Filterung von Oberwellen Wert gelegt wird.

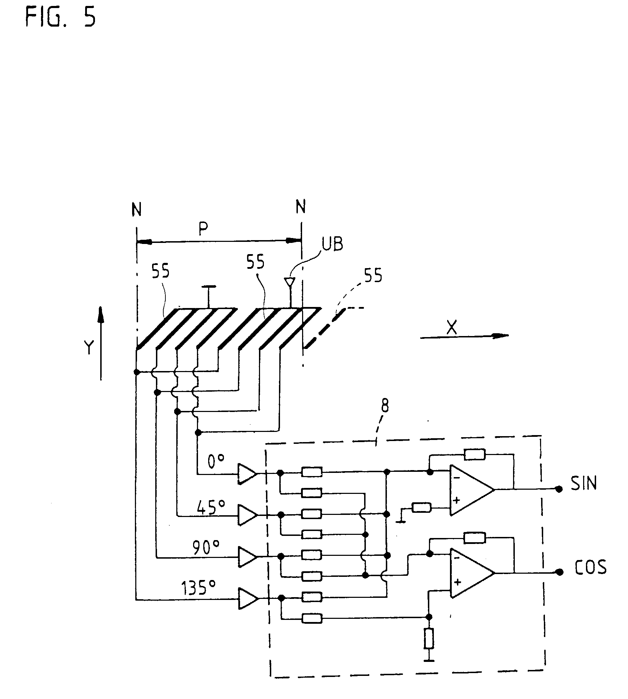

In Figur 5 ist eine Anordnung gezeigt, bei der zur Unterdrückung von Oberwellen z.B. acht Sensor-Elemente 55 pro Teilungsperiode P angeordnet sind. Die Signale der einzelnen Halb- oder Vollbrücken werden einzeln verstärkt und dann über ein Netzwerk 8 zu zwei Signalen SIN und COS verknüpft, wobei die Widerstände des Netzwerkes 8 so gewählt sind, daß möglichst sinusförmige Signale entstehen. Mit dieser Anordnung können z.B. Oberwellen bis zur Ordnungszahl 6 unterdrückt werden.

Weitere Oberwellen können in an sich bekannter Weise dadurch unterdrückt werden, daß die Länge der Sensor-Elemente gemessen in Meßrichtung x der Länge der Oberwelle entspricht, die man eliminieren will (z.B. bei der dritten Oberwelle =1/3 der Teilungsperiode).

Beide genannten Filterverfahren können getrennt oder in Kombination miteinander angewandt werden.

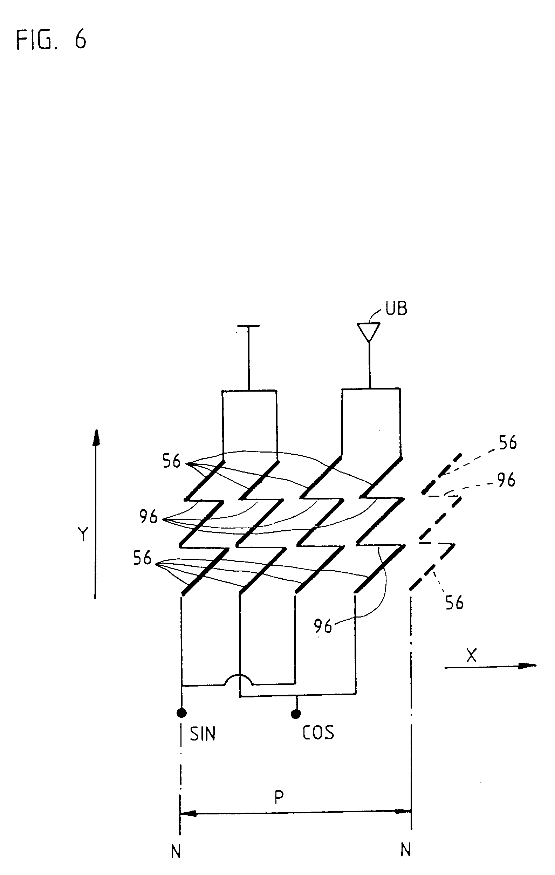

Figur 6 zeigt eine derartige Ausführungsform in verbesserter Form, bei der die empfindlichen Sensor-Elemente 56 abschnittsweise in Richtung quer zum Maßstab versetzt zueinander angeordnet sind und untereinander durch magnetfeldunempfindliche Leiter 96 verbunden sind. Durch diese Anordnung ist die effektive Länge der Sensor-Elemente 56 größer und es kann eine größere Fläche des Maßstabes abgetastet werden, was zu besseren Signalen führt.

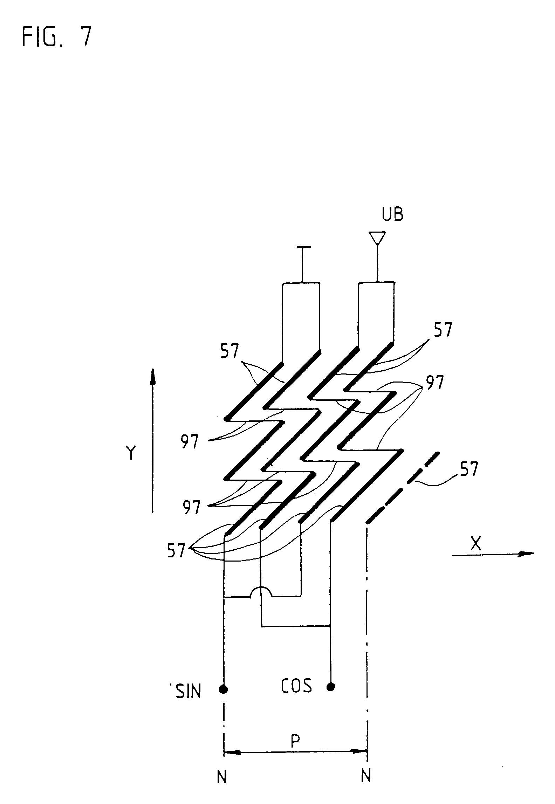

Figur 7 zeigt eine Sensoranordnung die eine dichtere Packung und größere Länge als die in Figur 6 gezeigte Anordnung aufweist. Dies wird dadurch erreicht, daß die Sensor-Elemente 57 quer zum Maßstab um einen kleinen Betrag versetzt sind. Dadurch können die Sensor-Elemente 57 z.B. im Abstand von 1/4 Teilungsperiode P zueinander angeordnet werden und trotzdem in Teilungsrichtung gemessen eine größere effektive Länge als den Abstand voneinander haben (z.B. 1/3 Teilungsperiode zur besseren Filterung).

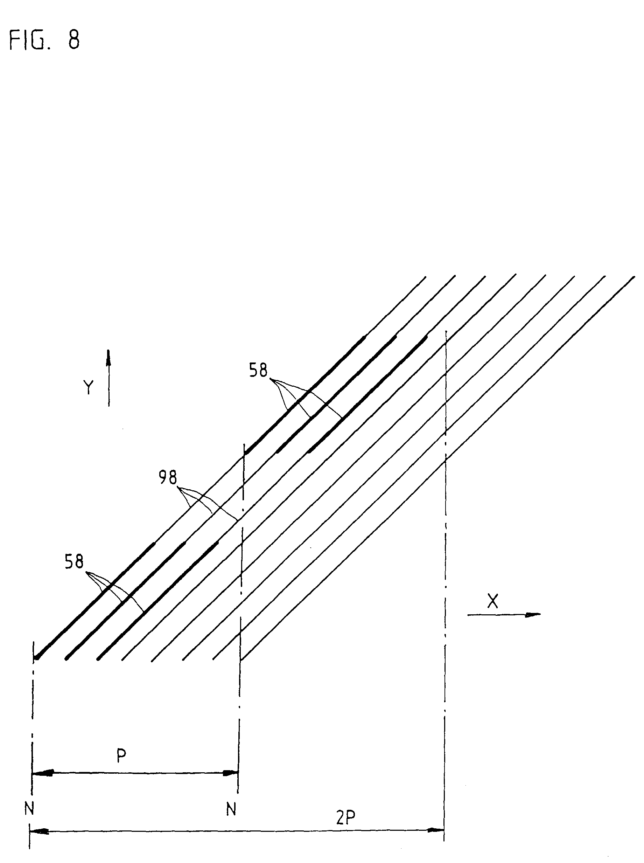

In Figur 8 sind Sensor-Elemente 58 gezeigt, die sich über mehrere Teilungsperioden P erstrecken, die nur abschnittsweise empfindliche Zonen aufweisen (dick gezeichnet) und mit magnetfeldunempfindlichen Leitern 98 verbunden sind.

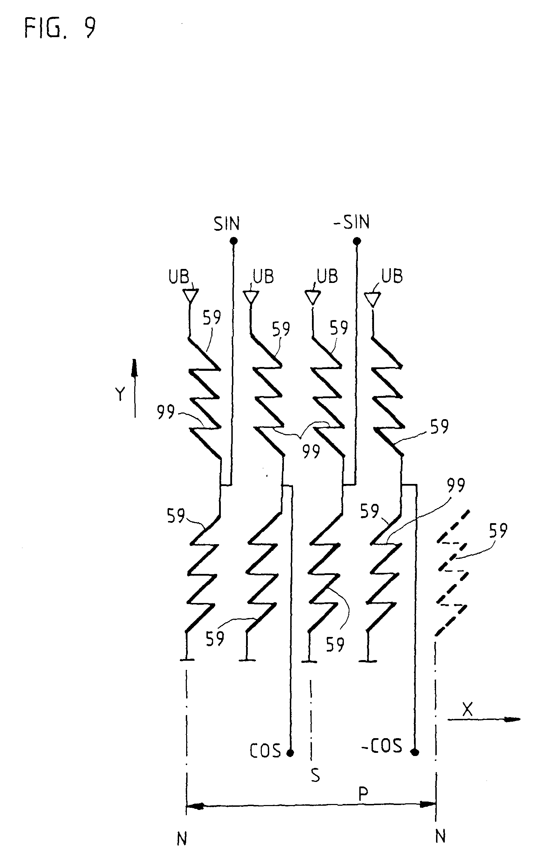

Figur 9 zeigt eine Variante mit acht Sensor-Elementen 59 von denen jeweils vier zu einer Vollbrücke zusammengeschaltet werden können. Die Sensor-Elemente 59 die eine Halbbrücke bilden sind wie gezeigt, jeweils in ihrer Richtung um 90° zueinander gedreht. Wenn die Sensor-Elemente 59 so zueinander stehen, liefern sie auf Grund des linearen Verhaltens Signale, die um 180° zueinander versetzt sind. Bei Zusammenschaltung in einer Halbbrücke erhält man Signale mit doppelter Amplitude. Der Vorteil bei dieser Anordnung besteht darin, daß die Sensor-Elemente 59 einer Halbbrücke nicht in Meßrichtung um 1/2 Teilungsperiode P versetzt angeordnet werden müssen. Die Signale SIN, COS und -SIN, -COS werden aus nahe beieinander liegenden Maßstabsstellen gewonnen. Die Sensor-Elemente 59 einer Halbbrücke sind lediglich quer zur Meßrichtung X versetzt angeordnet. Hier sind wieder nur die schräg liegenden, mit dicken Strichen dargestellten Teile der Sensor-Elemente 59 magnetfeldempfindlich, die Verbindungsleiter 99 sind magnetfeldunempfindlich.

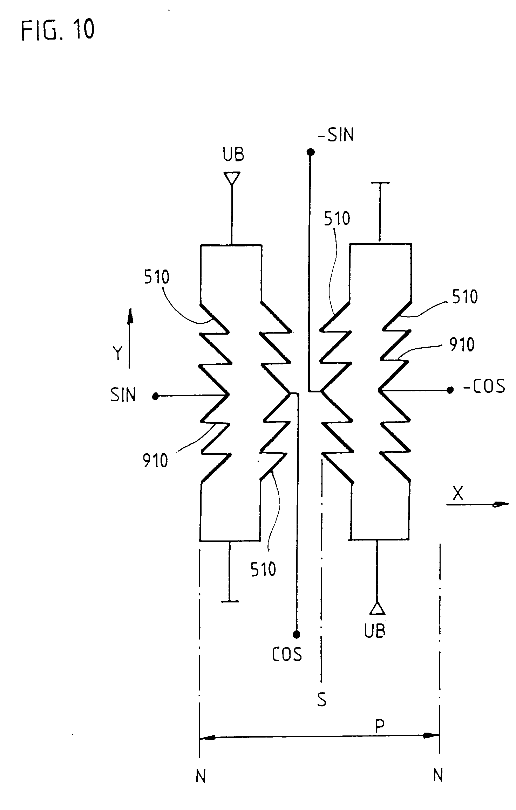

Die Anordnung der Figur 10 besteht aus vier Halbbrücken, deren Sensor-Elemente 510 jeweils um 1/4 Teilungsperiode P versetzt sind. Dabei sind jeweils die Richtungen der Sensor-Elemente 510 zweier Halbbrücken gleich, die der beiden anderen Halbbrücken demgegenüber jedoch um 90° verdreht. Die Differenz der Ausgangssignale liefert jeweils ein sinusförmiges Signal, wobei die zweiten Oberwellen herausgefiltert werden.

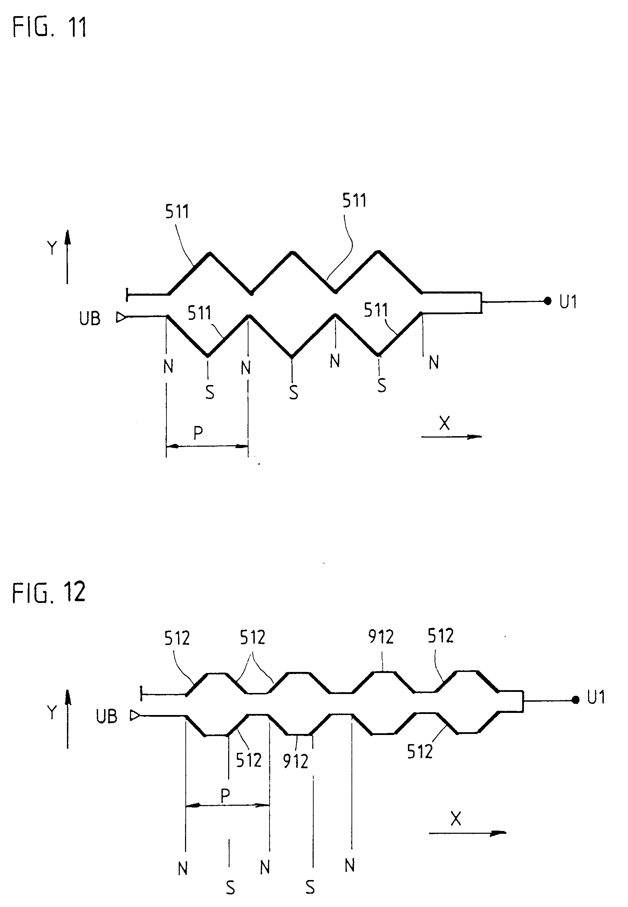

Figur 11 zeigt eine weitere Anordnung als Halbbrücke, wobei für die Viertel-Brücken jeweils mehrere Sensor-Elemente 511 in Reihe geschaltet sind. Die Sensor-Elemente 511 einer Viertel-Brücke erstrecken sich über mehrere Teilungsperioden P, wobei die Länge eines Einzel-Sensor-Elementes 511 einer halben Teilungsperiode P entspricht. Am Ausgang der Halbbrücke erhält man eine sinusförmige Spannung U1.

Wie bereits beim Ausführungsbeispiel in Figur 5 erwähnt, kann auch gemäß Figur 12 eine weitere Oberwelle eliminiert werden, wenn die Länge der Sensor-Elemente 512 auf die Länge einer bestimmten Oberwelle der Teilungsperiode (z.B. 1/3 für die Filterung der dritten Oberwelle) abgestimmt ist. Dies ist in Figur 12 gezeigt, die sonst weitgehend der Figur 11 entspricht. Die Teilbereiche der Sensor-Elemente 512 sind auch hier wieder durch magnetfeldunempfindliche Leiter 912 miteinander verbunden.

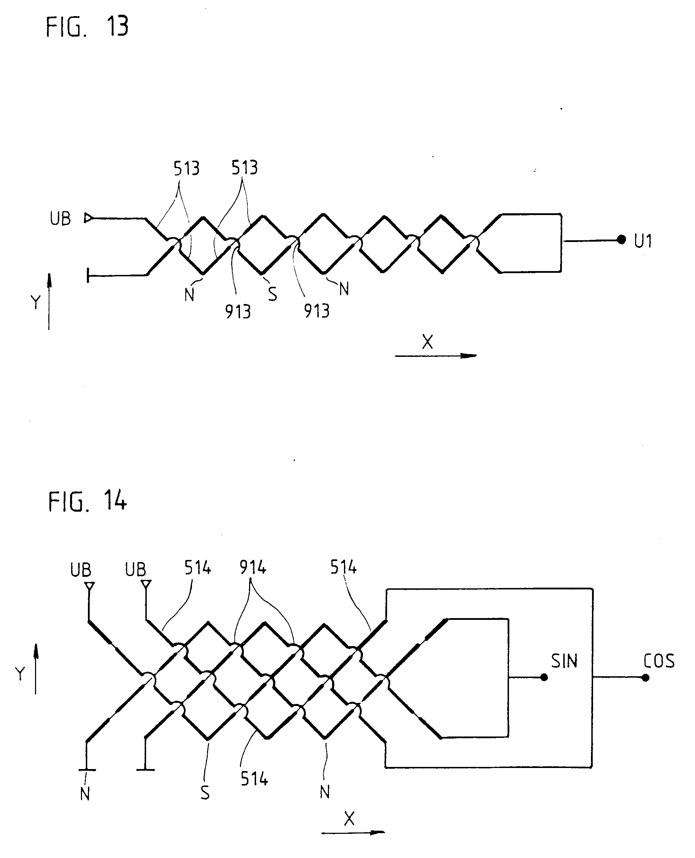

Figur 13 zeigt die Anordnung einer Halbbrücke ähnlich Figur 11, wobei die Sensor-Elemente 513 der Viertel-Brücken ineinander verschachtelt sind. Dies hat den Vorteil, daß das Signal aus dicht benachharten Stellen des Maßstabes gewonnen wird. An den Kreuzungspunkten sind die zusammengehörigen Sensor-Elemente 513 jeweils unterbrochen und mit magnetfeldunempfindlichen Leiterbahnen 913 verbunden, wobei die sich kreuzenden Leiterbahnen in unterschiedlichen Ebenen liegen und durch eine nicht dargestellte Isolierschicht getrennt sind.

Figur 14 entspricht Figur 13, jedoch sind hier die Sensor-Elemente 514 von zwei Halbbrücken, die zueinander um 1/4 Teilungsperioden verschoben sind, ineinander verschachtelt. Mit diesem Ausführungsbeispiel werden zwei Ausgangssignale SIN und COS erzeugt.

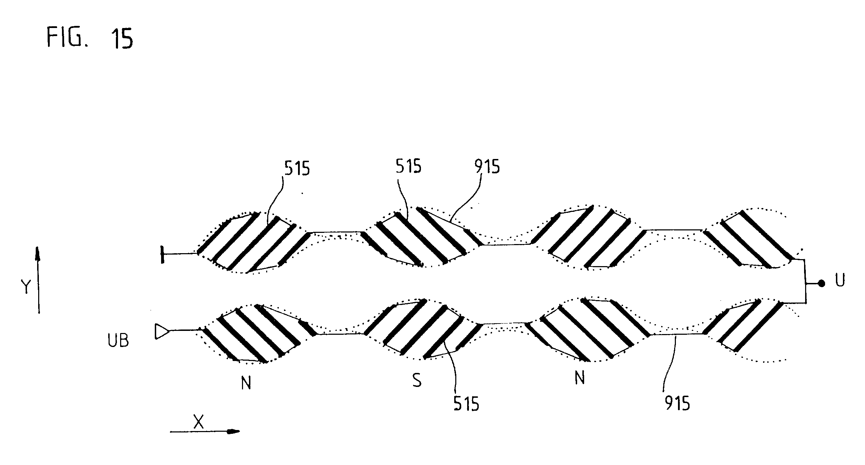

Figur 15 zeigt eine weitere, an sich bekannte Möglichkeit, die Oberwellen aus den Signalen zu filtern. Dies geschieht dadurch, daß die Länge der Sensor-Elemente 515 entsprechend ihrem Versatz in Meßrichtung x nach einer Cosinus-Funktion abgestuft ist, was aus dem Stand der Technik zwar an sich bekannt ist, aber in Verbindung mit der vorliegenden Erfindung zu besonders vorteilhaften Ergebnissen führt, da die Variationsmöglichkeiten hinsichtlich der Richtung und Länge der Sensor-Elemente sehr vielfältig sind.

Eine Signalfilterung kann auch dadurch erreicht werden, daß die Empfindlichkeit der Sensor-Elemente ortsabhängig durch unterschiedliche Neigung der Striche zur Meßrichtung eingestellt wird. Die Empfindlichkeit kann auch durch eine ortsabhängige unterschiedliche Breite der Sensor-Elemente verändert werden.

Es können im Rahmen der Erfindung Kombinationen aus Parallel- und Reihenschaltung der Sensor-Elemente innerhalb einer Viertel-Brücke gebildet werden. Ebenso können Kombinationen aus Parallel- und Reihenschaltungen von Halbbrücken oder Vollbrücken gebildet werden.

Das Hilfsfeld kann, wie bereits erwähnt, wahlweise durch einen Permanentmagneten oder durch eine Spule erzeugt werden. Bei Verwendung einer Spule kann außerdem ein trägerfrequentes Ausgangssignal dadurch erzeugt werden, daß die Spule mit hochfrequentem Strom gespeist wird.

Das Hilfsfeld kann auch dadurch erzeugt werden, daß dem Maßstab eine permanente Magnetisierung quer zur Meßrichtung aufgeschrieben wird.

## Patentansprüche

1. Positionsmeßeinrichtung (1) zur Messung der Relativlage zweier zueinander beweglicher Objekte, bei der eine an einem der beiden Objekte vorgesehene periodische magnetische Meßteilung (3) in Meßrichtung (X) von einer am anderen der beiden Objekte vorgesehen Abtasteinheit (4) mittels mehrerer magnetoresistiver Elemente (5) zur Erzeugung von positionsabhängigen Ausgangssignalen (SIN, COS) abgetastet wird, aus denen in einer Auswerteeinrichtung Positionsmeßwerte gebildet werden, wobei die magnetoresistiven Elemente (5) in der Abtasteinheit (4) in einer zur Meßteilung (3) parallelen Ebene unter einem Winkel (β) zur Meßrichtung (X) geneigt angeordnet sind und der Winkel (β) von 0 und 90 Grad abweicht, und die magnetoresistiven Elemente (5) in Meßrichtung (X) hintereinander in Abständen von Bruchteilen einer Teilungsperiode (P) angeordnet und miteinander zu elektrischen Brücken verschaltet sind, dadurch gekennzeichnet daß die Länge der derart angeordneten magnetoresistiven Elemente (5) in Meßrichtung (X) gemessen einen Bruchteil der Teilungsperiode (P) beträgt, wobei der Bruchteil durch den Kehrwert der zu eliminierenden Oberwelle bestimmt wird, und die magnetoresistiven Elemente (5) von einem magnetischen Hilfsfeld (Y), das senkrecht zum von der Maßstabsmagnetisierung verursachten Streufeld wirkt, magnetisch vorgespannt werden.

2. Positionsmeßeinrichtung (1) zur Messung der Relativlage zweier zueinander beweglicher Objekte, bei der eine an einem der beiden Objekte vorgesehene periodische magnetische Meßteilung (3) in Meßrichtung (X) von einer am anderen der beiden Objekte vorgesehen Abtasteinheit (4) mittels mehrerer magnetoresistiver Elemente (5) zur Erzeugung von positionsabhängigen Ausgangssignalen (SIN, COS) abgetastet wird, aus denen in einer Auswerteeinrichtung Positionsmeßwerte gebildet werden, wobei die magnetoresistiven Elemente (5) in der Abtasteinheit (4) in einer zur Meßteilung (3) parallelen Ebene unter einem Winkel (β) zur Meßrichtung (X) geneigt angeordnet sind und der Winkel (β) von 0 und 90 Grad abweicht, und die magnetoresistiven Element (5) in Meßrichtung (X) hintereinander in Abständen von Bruchteilen einer Teilungsperiode (P) angeordnet und miteinander zu elektrischen Brücken verschaltet sind, dadurch gekennzeichnet, daß die Länge der Sensor-Elemente (5) entsprechend ihrem Versatz in Meßrichtung (X) nach einer COS-Funktion abgestuft ist, so daß die Anordnung der magnetoresistiven Elemente (5) eine Filterfunktion zur Filterung von Oberwellen besitzt, und die magnetoresistiven Elemente (5) von einem magnetischen Hilfsfeld (Y), das senkrecht zum von der Maßstabsmagnetisierung verursachten Streufeld wirkt, magnetisch vorgespannt werden.

3. Positionsmeßeinrichtung (1) zur Messung der Relativlage zweier zueinander beweglicher Objekte, bei der eine an einem der beiden Objekte vorgesehene periodische magnetische Meßteilung (3) in Meßrichtung (X) von einer am anderen der beiden Objekte vorgesehen Abtasteinheit (4) mittels mehrerer magnetoresistiver Elemente (5) zur Erzeugung von positionsabhängigen Ausgangssignalen (SIN, COS) abgetastet wird, aus denen in einer Auswerteeinrichtung Positionsmeßwerte gebildet werden, wobei die magnetoresistiven Elemente (5) in der Abtasteinheit (4) in einer zur Meßteilung (3) parallelen Ebene unter einem Winkel (β) zur Meßrichtung (X) geneigt angeordnet sind und der Winkel (β) von 0 und 90 Grad abweicht, und die magnetoresistiven Elemente (5) in Meßrichtung (X) hintereinander in Abständen von Bruchteilen einer Teilungsperiode (P) angeordnet und miteinander zu elektrischen Brücken verschaltet sind, dadurch gekennzeichnet, daß die Empfindlichkeit der magnetoresistiven Elemente (5) durch unterschiedliche Neigung oder Breite der magnetoresistiven Elemente (5) ortsabhängig in Meßrichtung (X) variiert, so daß die Anordnung der magnetoresistiven Elemente (5) eine Filterfunktion zur Filterung von Oberwellen besitzt, und die magnetoresistiven Elemente (5) von einem magnetischen Hilfsfeld (Y), das senkrecht zum von der Maßstabsmagnetisierung verursachten Streufeld wirkt, magnetisch vorgespannt werden.

4. Positionsmeßeinrichtung nach einem der Ansprüche 1 bis 3, dadurch gekennzeichnet, daß die Länge der magnetoresistiven Elemente innerhalb einer Teilbrücke nach einer COS-Funktion abgestuft ist.

5. Positionsmeßeinrichtung nach Anspruch 4, dadurch gekennzeichnet, daß die magnetoresistiven Elemente (5) quer zur Meßrichtung (X) zueinander versetzt sind, wodurch eine höhere Packungsdichte erzielt wird.

6. Positionsmeßeinrichtung nach einem der Ansprüche 1 bis 3, dadurch gekennzeichnet, daß die magnetoresistiven Elemente (5) ineinander verschachtelt sind.

## Claims

1. Position measuring device (1) for measurement of the relative position of two objects movable to one another, in which a periodic magnetic measurement graduation (3) provided on one of the two objects is scanned in the direction of measurement (X) by a scanning unit (4) provided on the other of the two objects by means of several magneto-resistive elements (5) to generate position-dependent output signals (SIN, COS), from which position measured values are formed in an evaluation system, said magneto-resistive elements (5) being arranged in the scanning unit (4) in a plane parallel to the measurement graduation (3) and inclined at an angle (β) to the direction of measurement (X) and said angle (β) differing from 0° and 90°, and the magneto-resistive elements (5) are arranged one behind the other in the direction of measurement (X) at distances of fractions of graduation periods (P) and are circuited together to form electrical bridges, characterised in that the length of the magneto-resistive elements (5) arranged in this manner measured in the direction of measurement (X) amounts to a fraction of the graduation period (P), in which case the fraction is determined by the reciprocal of the upper harmonic to be eliminated, and the magneto-resistive elements (5) are magnetically biased by a magnetic auxiliary field (Y) acting perpendicular to the field of scatter caused by the scale magnetisation.

2. Position measuring device (1) for measurement of the relative position of two objects movable to one another, in which a periodic magnetic measurement graduation (3) provided on one of the two objects is scanned in the direction of measurement (X) by a scanning unit (4) provided on the other of the two objects by means of several magneto-resistive elements (5) to generate position-dependent output signals (SIN, COS), from which position measured values are formed in an evaluation system, said magneto-resistive elements (5) being arranged in the scanning unit (4) in a plane parallel to the measurement graduation (3) and inclined at an angle (β) to the direction of measurement (X) and said angle (β) differing from 0° and 90°, and the magneto-resistive elements (5) are arranged one behind the other in the direction of measurement (X) at distances of fractions of graduation periods (P) and are circuited together to form electrical bridges, characterised in that the length of the sensor elements (5) in accordance with their displacement in the direction of measurement (X) is stepped according to a COS function so that the arrangement of the magneto-resistive elements (5) has a filter function for filtering upper harmonics, and the magneto-resistive elements (5) are magnetically biased by a magnetic auxiliary field (Y) acting perpendicular to the field of scatter caused by the scale magnetisation.

3. Position measuring device (1) for measurement of the relative position of two objects movable to one another, in which a periodic magnetic measurement graduation (3) provided on one of the two objects is scanned in the direction of measurement (X) by a scanning unit (4) provided on the other of the two objects by means of several magneto-resistive elements (5) to generate position-dependent output signals (SIN, COS), from which position measured values are formed in an evaluation system, said magneto-resistive elements (5) being arranged in the scanning unit (4) in a plane parallel to the measurement graduation (3) and inclined at an angle (β) to the direction of measurement (X) and said angle (β) differing from 0° and 90°, and the magneto-resistive elements (5) are arranged one behind the other in the direction of measurement (X) at distances of fractions of graduation periods (P) and are circuited together to form electrical bridges, characterised in that the sensitivity of the magneto-resistive elements (5) varies in the direction of measurement (X) dependent on location as a result of the different inclination or width of the magneto-resistive elements (5) so that the arrangement of the magneto-resistive elements (5) has a filter function for filtering upper harmonics, and the magneto-resistive elements (5) are magnetically biased by a magnetic auxiliary field (Y) acting perpendicular to the field of scatter caused by the scale magnetisation.

4. Position measuring device according to one of Claims 1 to 3, characterised in that the length of the magneto-resistive elements is stepped within a partial bridge according to a COS function.

5. Position measuring device according to Claim 4, characterised in that the magneto-resistive elements (5) are staggered transversely to the direction of measurement (X), as a result of which a higher packing density is achieved.

6. Position measuring device according to one of Claims 1 to 3, characterised in that the magneto-resistive elements (5) are interleaved.

## Revendications

1. Dispositif de mesure de position (1) pour la mesure de la position relative de deux objets mobiles l'un par rapport à l'autre, dans lequel une graduation (3) de mesure périodique magnétique prévue sur l'un des objets est palpée dans la direction de mesure (X) par une unité de palpage (4) prévue sur l'autre objet, au moyen de plusieurs éléments (5) magnétorésistifs aux fins de produire des signaux de sortie (SIN, COS) dépendant de la position, à partir desquels des valeurs de mesure de position sont formées dans un dispositif de traitement, les éléments (5) magnétorésistifs dans l'unité de palpage (4) étant disposés dans un plan parallèle à la graduation de mesure (3) avec une inclinaison (β) par rapport à la direction de mesure (X), l'angle (β) étant différent de O et de 90°, les éléments (5) magnétorésistifs étant disposés l'un derrière l'autre dans la direction de mesure (X) avec un espacement correspondant à des fractions d'une période (P) de graduation et étant connectés les uns aux autres pour former des ponts électriques, caractérisé par le fait que la longueurs des éléments (5) magnétorésistifs ainsi disposés, mesurée dans la direction (X), représente une fraction de la période de graduation (P), la fraction étant déterminée par la valeur réciproque de l'harmonique à éliminer et les éléments (5) magnétorésistifs étant polarisés magnétiquement par un champ magnétique (Y) auxiliaire qui agit perpendiculairement au champ de dispersion résultant de la magnétisation de la règle.

2. Dispositif de mesure de position (1) pour la mesure de la position relative de deux objets mobiles l'un par rapport à l'autre, dans lequel une graduation (3) de mesure périodique magnétique prévue sur l'un des deux objets est palpée dans la direction de mesure (X) par une unité de palpage (4) prévue sur l'autre objet, au moyen de plusieurs éléments (5) magnétorésistifs aux fins de produire des signaux de sortie (SIN, COS) dépendants de la position, à partir desquels des valeurs de mesure de position sont formées dans un dispositif de traitement, les éléments (5) magnétorésistifs dans l'unité de palpage (4) étant disposés dans un plan parallèle à la graduation de mesure (3) avec une inclinaison (β) par rapport à la direction de mesure (X), l'angle (β) étant différent de 0 et de 90°, les éléments (5) magnétorésistifs étant disposés l'un derrière l'autre dans la direction de mesure (X) avec un espacement correspondant à des fractions d'une période (P) de graduation et étant connectés les uns aux autres pour former des ponts électriques, caractérisé par le fait que la longueurs des éléments (5) palpeurs est échelonnée en fonction du décalage desdits éléments dans la direction de mesure (X), suivant une fonction COS de sorte que l'agencement des éléments (5) magnétorésistifs a une fonction de filtre d'harmoniques et les éléments (5) magnétorésistifs étant polarisés magnétiquement par un champ magnétique (Y) auxiliaire qui agit perpendiculairement au champ de dispersion résultant de la magnétisation de la règle.

3. Dispositif de mesure de position (1) pour la mesure de Ta position relative de deux objets mobiles l'un par rapport à l'autre dans lequel une graduation (3) de mesure périodique magnétique prévue sur l'un des deux objets est palpée dans la direction de mesure (X) par une unité de palpage (4) prévue sur l'autre objet, au moyen de plusieurs éléments (5) magnétorésistifs aux fins de produire des signaux de sortie (SIN, COS) dépendants de la position, à partir desquels des valeurs de mesure de position sont formées dans un dispositif de traitement, les éléments (5) magnétorésistifs dans l'unité de palpage (4) étant disposés dans un plan parallèle à la graduation de mesure (3) avec une inclinaison (β) par rapport à la direction de mesure (X), l'angle (β) étant différent de 0 et de 90°, les éléments (5) magnétorésistifs étant disposés l'un derrière l'autre dans la direction de mesure (X) avec un espacement correspondant à des fractions d'une période (P) de graduation et étant connectés les uns aux autres pour former des ponts électriques, caractérisé par le fait que la sensibilité des éléments (5) magnétorésistifs varie par une inclinaison ou une largeur différente des éléments (5) magnétorésistifs en fonction de la position dans la direction de mesure (X) de sorte que l'agencement des éléments (5) magnétorésistifs a une fonction de filtre d'harmoniques et les éléments (5) magnétorésistifs étant polarisés magnétiquement par un champ magnétique (Y) auxiliaire qui agit perpendiculairement au champ de dispersion résultant de la magnétisation de la règle.

4. Dispositif de mesure de position selon une des revendications 1 à 3, caractérisé par le fait que la longueur des éléments magnétorésistifs est échelonnée suivant une fonction COS à l'intérieur d'une partie de pont.

5. Dispositif de mesure de position selon la revendication 4, caractérisé par le fait que les éléments (5) magnétorésistifs sont décalés les uns par rapport aux autres, transversalement à la direction de mesure (X), permettant ainsi d'obtenir une plus forte densité.

6. Dispositif de mesure de position selon une des revendications 1 à 3, caractérisé par le fait que les éléments (5) magnétorésistifs sont imbriqués les uns dans les autres.
